# EUROPEAN PATENT APPLICATION

(11) **EP 4 723 749 A1**
(43) Date of publication of application: **08.04.2026**
(21) Application number: 23938999.2
(22) Date of filing: 02.06.2023
(51) Int. Cl.: H04W 52/02, H04W 28/12

(54) **LOW-LATENCY SERVICE TRANSMISSION METHOD, ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/098135
(87) International publication number: WO 2024/244015

(57) **Abstract**

Embodiments of the present disclosure relate to the technical field of mobile communications, and provide a low-latency service transmission method, an electronic device and a storage medium. The low-latency service transmission method is applied to a first access point (AP). The method comprises: determining a first radio frame, wherein the first radio frame comprises a second R-TWT SP of a second AP and time synchronization parameter (TSF) information of the second AP; sending the first radio frame to instruct a station (STA) to determine the time of the second R-TWT SP according to the TSF information and the second R-TWT SP, and not communicate with the first AP within the time of the second R-TWT SP. The embodiments of the present disclosure provide a transmission mode of low-latency service data.

## Description

### TECHNICAL FIELD

Embodiments of the present disclosure relate to the field of mobile communication technologies, and in particular, to a low-latency service transmission method, an electronic device, and a storage medium.

### BACKGROUND

At present, research contents regarding Wi-Fi technology, such as Ultra High Reliability (Ultra High Reliability, UHR), aim to improve reliability of Wireless Local Area Network (Wireless Local Area Network, WLAN) connectivity, reduce latencies, increase manageability, increase throughput at different Signal to Noise Ratio (Signal to Noise Ratio, SNR) levels and reduce device level power consumption.

To ensure transmission of low-latency service data, Restricted Target Wake Time (Restricted Target Wake Time, R-TWT) is proposed. To further reduce restrictions on transmission capabilities during the transmission of low-latency service data and reduce interference during the transmission of low-latency service data, the transmission process needs to be optimized.

### SUMMARY

Embodiments of the present disclosure provide a low-latency service transmission method, an electronic device and a storage medium to provide a transmission mode for low-latency service data.

In an aspect, the embodiments of the present disclosure provide a low-latency service transmission method, performed by a first access point (AP) device, where the method includes:
determining a first wireless frame, where the first wireless frame includes a second R-TWT SP of a second AP and timing synchronization parameter (TSF) information of the second AP; and
sending the first wireless frame to instruct a station (STA) device to: determine a time of the second R-TWT SP according to the TSF information and the second R-TWT SP, and refrain from communicating with the first AP within the time of the second R-TWT SP.

In another aspect, the embodiments of the present disclosure further provide a low-latency service transmission method, performed by a station (STA) device, where the method includes:
receiving a first wireless frame sent by a first access point (AP) device, where the first wireless frame includes a second R-TWT SP of a second AP and TSF information of the second AP; and
determining a time of the second R-TWT SP according to the TSF information and the second R-TWT SP, and refraining from communicating with the first AP within the time of the second R-TWT SP.

In another aspect, the embodiments of the present disclosure further provide an electronic device, where the electronic device is a first access point (AP) device and includes:
a determining module, configured to determine a first wireless frame, where the first wireless frame includes a second R-TWT SP of a second AP and TSF information of the second AP; and
a sending module, configured to send the first wireless frame to instruct a station (STA) device to: determine a time of the second R-TWT SP according to the TSF information and the second R-TWT SP, and refrain from communicating with the first AP within the time of the second R-TWT SP.

In another aspect, the embodiments of the present disclosure further provide an electronic device, where the electronic device is a station (STA) device and includes:
a receiving module, configured to receive a first wireless frame sent by a first access point (AP) device, where the first wireless frame includes a second R-TWT SP of a second AP and TSF information of the second AP; and
a communication module, configured to determine a time of the second R-TWT SP according to the TSF information and the second R-TWT SP, and refrain from communicating with the first AP within the time of the second R-TWT SP.

The embodiments of the present disclosure further provide an electronic device, including a memory, one or more processors, and a computer program stored in the memory and executable on the one or more processors, where when the one or more processors execute the program, one or more methods according to the embodiments of the present disclosure are implemented.

The embodiments of the present disclosure further provide a computer-readable storage medium, having a computer program stored thereon, where when the computer program is executed by one or more processors, one or more methods according to the embodiments of the present disclosure are implemented.

In the embodiments of the present disclosure, the first AP determines a first wireless frame (where the first wireless frame includes a second R-TWT SP of a second AP and TSF information of the second AP), and sends the first wireless frame to instruct a STA to determine a time of the second R-TWT SP according to the TSF information and the second R-TWT SP and refrain from communicating with the first AP within the time of the second R-TWT SP. In this way, the STA that receives the first wireless frame can specifically determine, according to the TSF information and the second R-TWT SP in the first wireless frame, the actual time of the second R-TWT SP when shared by the first AP (that is, the time of the second R-TWT SP) corresponding to the time of the second R-TWT SP when shared by the second AP, that is, synchronize the time of the second R-TWT SP when shared by the first AP with the time of the second R-TWT SP when shared by the second AP. The STA refraining from communicating with the first AP within the time of the second R-TWT SP can avoid interference to low-latency service communication within the second R-TWT SP caused by communication between the STA and the first AP. Therefore, both the service data transmission between the first AP and the STA and the communication of low-latency services within the second R-TWT SP are ensured, improving data transmission efficiency and spectrum utilization. The embodiments of the present disclosure provide a transmission mode for low-latency service data.

Additional aspects and advantages of the embodiments of the present disclosure will be partially provided in the following description, which will become obvious from the following description or be learned through practice of the present disclosure.

### BRIEF DESCRIPTION OF DRAWINGS

To more clearly illustrate the technical solutions of the embodiments of the present disclosure, the drawings required for describing the embodiments of the present disclosure will be briefly introduced below. Obviously, the drawings in the following description are only some embodiments of the present disclosure. For those of ordinary skill in the art, other drawings can be obtained according to these drawings without creative efforts.
FIG. 1 is a schematic diagram of a first example according to an embodiment of the present disclosure.
FIG. 2 is another schematic diagram of a first example according to an embodiment of the present disclosure.
FIG. 3 is a flowchart of a low-latency service transmission method according to an embodiment of the present disclosure.
FIG. 4 is another flowchart of a low-latency service transmission method according to an embodiment of the present disclosure.
FIG. 5 is a schematic structural diagram of an electronic device according to an embodiment of the present disclosure.
FIG. 6 is another schematic structural diagram of an electronic device according to an embodiment of the present disclosure.
FIG. 7 is yet another schematic structural diagram of an electronic device according to an embodiment of the present disclosure.

### DETAILED DESCRIPTION

Exemplary embodiments will be described in detail herein, and examples thereof are shown in the accompanying drawings. When the following description refers to the accompanying drawings, unless otherwise indicated, the same numerals in different drawings represent the same or similar elements. The implementations described in the following exemplary embodiments do not represent all implementations consistent with the present invention. Instead, they are merely examples of apparatuses and methods consistent with some aspects of the present invention as detailed in the appended claims.

In the embodiments of the present disclosure, the terms used are only for the purpose of describing specific embodiments and are not intended to limit the present disclosure. The singular forms "a", "the" and "this" used in the present disclosure and the appended claims are also intended to include plural forms, unless the context clearly indicates otherwise. It should also be understood that the term "and/or" as used herein refers to and encompasses any or all possible combinations of one or more associated listed items. For example, A and/or B can represent: A exists alone, A and B exist at the same time, and B exists alone. The character "/" generally indicates that the associated objects are in an "or" relationship. The term "a plurality of" refers to two or more. In view of this, " a plurality of " can also be understood as "at least two" in the embodiments of the present disclosure.

It should be understood that although the terms first, second, third, etc. may be used in the present disclosure to describe various information, such information should not be limited to these terms. These terms are only used to distinguish the same type of information from each other. For example, without departing from the scope of the present disclosure, first information may also be referred to as second information, and similarly, second information may also be referred to as first information. Depending on the context, for example, the word "if' as used herein may be interpreted as "when", "while" or "in response to determining".

The technical solutions in the embodiments of the present disclosure will be clearly and completely described below with reference to the accompanying drawings in the embodiments of the present disclosure. Obviously, the described embodiments are only a part of the embodiments of the present disclosure, rather than all the embodiments. Based on the embodiments in the present disclosure, all other embodiments obtained by those of ordinary skill in the art without creative efforts shall fall within the protection scope of the present disclosure.

Embodiments of the present disclosure provide a low-latency service transmission method, an electronic device and a storage medium to provide a mechanism supporting AP power saving.

The method and the apparatus are based on the same application concept. Since the principles of solving problems by the method and the apparatus are similar, the implementations of the apparatus and the method can be referred to each other, and repeated parts will not be described.

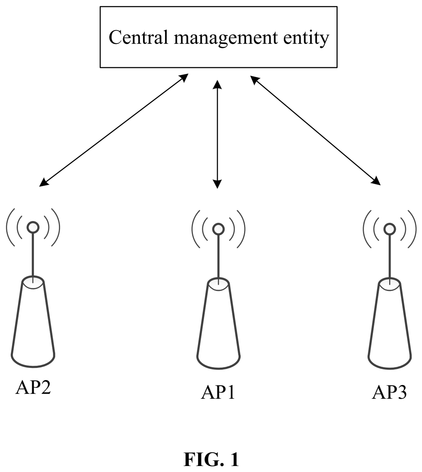

Referring to FIG. 1, there are three APs under the same central management entity (central management entity), namely AP1, AP2, and AP3. Among them, AP2 and AP1 are mutual neighboring APs, AP1 and AP3 are mutual neighboring APs, and AP2 and AP3 have no neighboring relationship. For the R-TWT SP sharing mechanism, AP1, AP2, and AP3 may involve the following contents:
(1) AP1 can monitor beacon frames of AP2 and AP3. AP2 cannot monitor beacon frames of AP3.
(2) AP3 cannot monitor beacon frames of AP2.
(3) AP1 broadcasts a first R-TWT SP of AP1, a second R-TWT SP of AP2 (a neighboring AP of AP1), and a third R-TWT SP of AP3 (a neighboring AP of AP1).

That is, AP1 broadcasts the second R-TWT SP of AP2 and the third R-TWT SP of AP3 to the STA associated with AP1 (which may be referred to as STA1 in the embodiments of the present disclosure).

In the embodiments of the present disclosure, if an AP broadcasts the R-TWT SP of another AP, the other AP may be referred to as a sharing AP.

Optionally, AP1 and a sharing AP may be affiliated APs of the same or different AP MLDs, or may be different AP MLDs or independent APs, which is not limited herein. Optionally, AP1 is affiliated to a first AP MLD, and the sharing AP is affiliated to a second AP MLD. AP1 and the sharing AP may be within a certain position range or coverage range, so that AP1 can obtain parameter information of the sharing AP, for example, AP1 can obtain the R-TWT SP of the sharing AP.

Any two APs can perform data transmission through beacon frames or probe response frames. A probe response frame may be an unsolicited probe response frame.

The start time of each R-TWT SP is associated with the broadcasting AP of the R-TWT SP. Taking the second R-TWT SP as an example, when the second R-TWT SP is broadcast by the second AP and the first AP respectively, there is a deviation between the generated start times of the two second R-TWT SPs. Generally, the second AP and the STA associated with the second AP (which may be referred to as STA2 in the embodiment of the present disclosure) transmit low-latency service data in the second R-TWT SP. Therefore, if the second R-TWT SP is directly broadcast to STA1 by the first AP, the generated second R-TWT SP is different from the second R-TWT SP shared by the second AP to STA2 (that is, the actual communication time within the second R-TWT SP), which may cause that while the second AP and STA2 transmit low-latency service data in the second R-TWT SP, STA1 communicates with the first AP, thereby interfering with the low-latency service data transmission between the second AP and STA2.

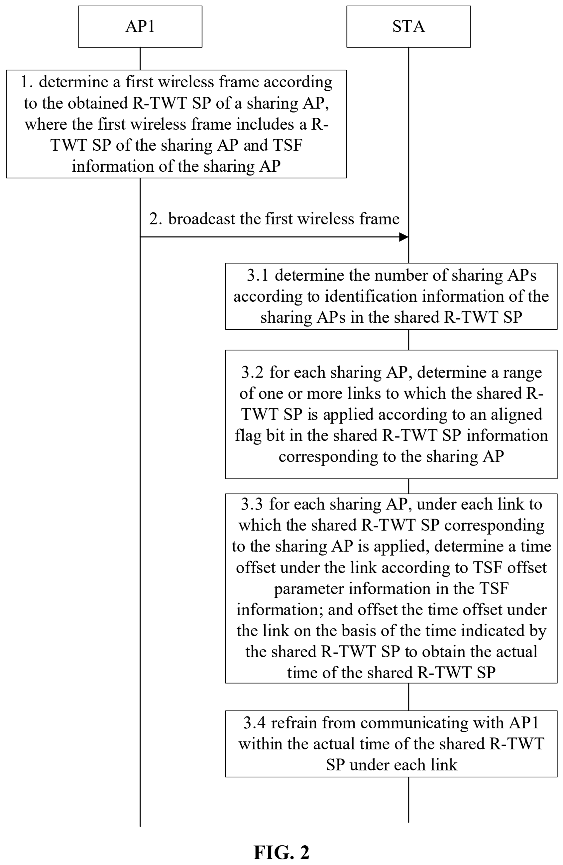

In view of this, a low-latency service data transmission mode is proposed in the embodiment of the present disclosure. As a first example, referring to FIG. 2, which shows an example of a low-latency service transmission method according to embodiments of the present disclosure. As shown in FIG. 2, the method may include the following steps.

Step 1: AP1 determines a first wireless frame according to the obtained R-TWT SP of a sharing AP, where the first wireless frame includes a R-TWT SP of the sharing AP and timing synchronization function (timing synchronization function, TSF) information of the sharing AP.

In the embodiment of the present disclosure, unless otherwise specified, the R-TWT SP of the sharing AP may be referred to as a shared R-TWT SP. For special cases, for example, if there are a plurality of sharing APs (such as AP2 and AP3), the shared R-TWT SP shared by AP2 may be referred to as a second R-TWT SP, and the shared R-TWT SP shared by AP3 may be referred to as a third R-TWT SP.

Optionally, when AP1 determines the first wireless frame, identification information of the sharing AP may be set in the first wireless frame to identify different sharing APs. The identification information may include at least one of a Media Access Control (Media Access Control, MAC) address, an Access Point Multi-Link Device (Access Point Multi-Link Device, AP MLD) address of an AP MLD to which the sharing AP belongs, a Basic Service Set color (Basic Service Set color, BSS color) or BSSID (Basic Service Set Identifier) information.

Optionally, when there are a plurality of sharing APs, after AP1 sets the identification information of each sharing AP in the first wireless frame, the set identification information of the sharing AP, the shared R-TWT SP and the TSF information may be associated according to different sharing APs.

Taking the identification information including a MAC address as an example, as shown in FIG. 1, if the sharing APs include AP2 and AP3, AP1 may set a second MAC address of AP2 in the first wireless frame, and associate the second MAC address, the second R-TWT SP and the second TSF information; and set a third MAC address of AP3 in the first wireless frame, and associate the third MAC address, the third R-TWT SP and the third TSF information.

Optionally, the TSF information may include TSF offset parameter information, and the TSF offset parameter information may include a time offset. The time offset indicates the offset time between the start times of two R-TWT SPs generated when the shared R-TWT SP is directly broadcast by AP1 and the sharing AP respectively.

As an example, when the shared R-TWT SP is directly broadcast by AP1, the generated shared R-TWT SP is from t1 to t2. When the shared R-TWT SP is directly broadcast by the sharing AP, the generated shared R-TWT SP (that is, the actual communication time within the shared R-TWT SP) is from t3 to t4. When the shared R-TWT SP is directly sent by AP1 and the sharing AP respectively, the durations of the two generated shared R-TWT SPs are the same, that is, s = t2 - t1 = t4 - t3. Then, the offset time (that is, the time offset) between the start times of the two shared R-TWT SPs generated when the shared R-TWT SP is directly sent respectively by AP1 and the sharing AP is t' = t3 - t1.

Optionally, in the embodiment of the present disclosure, AP1 may set an aligned flag bit in the first wireless frame. For example, the aligned flag bit may be included in the Broadcast TWT Parameter Set field of the R-TWT SP information. Different values of the aligned flag bit are configured to indicate the link to which the shared R-TWT SP is applied.

For example, when the aligned flag bit is set to 1, it indicates that the shared R-TWT SP is applied to a plurality of links; when the aligned flag bit is set to 0, it indicates that the shared R-TWT SP is applied to a single link.

Optionally, for the links to which the shared R-TWT SP is applied, there is an overlap between the times indicated by the shared R-TWT SP.

Optionally, in a case that the shared R-TWT SP is applied to a single link, a time offset of the shared R-TWT SP under the applied link may be set. In a case that the shared R-TWT SP is applied to a plurality of links, a time offset of the shared R-TWT SP under each applied link may be set.

Optionally, the time offsets of the shared R-TWT SP under applied links may be the same or different, that is, the time offsets under different links may be independent of each other. For example, in a case that the plurality of links to which the shared R-TWT SP is applied include Link1 and Link2, the time offset under Link1 and the time offset under Link2 may be the same or different.

Optionally, if the time offsets of the shared R-TWT SP under the applied links are the same, only one time offset may be set, which can save data transmission bandwidth.

Optionally, when the low-latency service data transmitted within the shared R-TWT SP is periodic service data, AP1 needs to broadcast the first wireless frame periodically to ensure that the service data transmission between AP1 and the STA does not affect the communication of low-latency services within the shared R-TWT SP of the sharing AP.

Step 2: AP1 broadcasts the first wireless frame to the STA.

Optionally, AP1 may broadcast the first wireless frame to the STA through a beacon frame, a probe response frame, an association response frame, or a reassociation response frame. The probe response frame may be an unsolicited probe response frame.

Step 3: After receiving the first wireless frame, the STA determines the shared R-TWT SP and the TSF information, and determines the actual time of the shared R-TWT SP shared by the first AP according to the shared R-TWT SP and the TSF information in combination with the following methods, and further determines the communication mode between the STA and AP1.

Step 3.1: the STA determines the number of sharing APs according to identification information of the sharing APs in the shared R-TWT SP.

Step 3.2: for each sharing AP, the STA determines one or more links to which the shared R-TWT SP is applied according to an aligned flag bit in the shared R-TWT SP information corresponding to the sharing AP.

Step 3.3: for each sharing AP, under each link to which the shared R-TWT SP corresponding to the sharing AP is applied, the STA determines a time offset under the link according to TSF offset parameter information in the TSF information; and offsets the time offset under the link on the basis of the time indicated by the shared R-TWT SP to obtain the actual time of the shared R-TWT SP.

As in the above example, the time of the shared R-TWT SP received by the STA from AP1 is from t1 to t2, and the time offset t' is t3 - t1. Then, by offsetting t' (that is, adding t') on the basis of the start time t1 of the received shared R-TWT SP, t3 can be obtained. On the basis of t3, the duration s (t4 - t3) indicated by the shared R-TWT SP is added to obtain t4, so that the actual time of the shared R-TWT SP is from t3 to t4, which is consistent with the shared R-TWT SP generated when the shared R-TWT SP is directly broadcast by the sharing AP. This achieves synchronization of the two shared R-TWT SPs generated when the time indicated by the shared R-TWT SP is broadcast by AP1 and the sharing AP respectively.

Step 3.4: the STA refrains from communicating with AP1 within the actual time of the shared R-TWT SP under each link.

In this way, the STA can determine the actual time of the shared R-TWT SP under each link to which each R-TWT SP is applied according to the TSF information and the shared R-TWT SP in the received first wireless frame. This achieves synchronization of the two shared R-TWT SPs generated when the time indicated by the shared R-TWT SP is broadcast by AP1 and the sharing AP respectively. Furthermore, by ensuring that the STA refrains from communicating with AP1 within the actual time of the shared R-TWT SP, interference with the low-latency service communication within the actual time of the shared R-TWT SP is avoided. Therefore, both the service data transmission between AP1 and the STA and the communication of low-latency services within the shared R-TWT SP are ensured, improving data transmission efficiency and spectrum utilization.

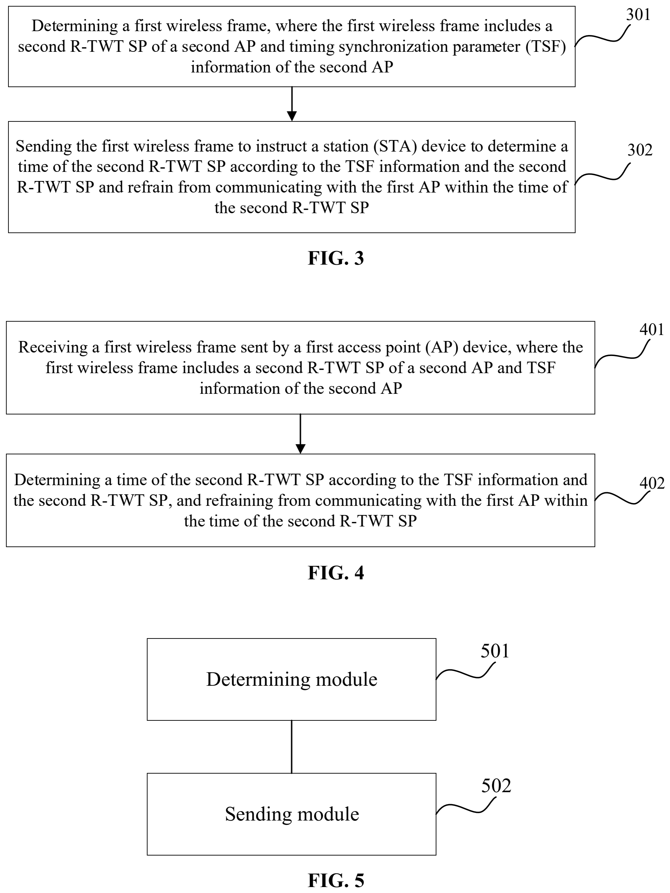

As shown in FIG. 3, an embodiment of the present disclosure provides a low-latency service transmission method, which may be optionally performed by a first access point (Access Point, AP) device. Optionally, in the embodiment of the present disclosure, all APs, such as the first AP, the second AP, AP1, AP2, and AP3, may be collectively referred to as APs. An AP is, for example, a device with a wireless-to-wired bridging function, and is responsible for extending services provided by a wired network to a wireless network. A station (Station, STA) device is, for example, an electronic device with a wireless network access function, which provides a frame delivery service to enable information transmission.

Optionally, an AP may include three forms, such as a soft AP (or soft AP MLD), a non-simultaneous transmitting and receiving (NSTR, Non-Simultaneous Transmitting and Receiving) mobile AP (or NSTR mobile AP MLD; a mobile AP is a mobile access point; an AP MLD is an Access Point Multi-Link Device), and a regular AP (or regular AP MLD; a regular AP is a conventional access point), where the regular AP is, for example, a router.

Referring to FIG. 3, the method may include the following steps.

Step 301: determining a first wireless frame, where the first wireless frame includes a second R-TWT SP of a second AP and timing synchronization parameter (TSF) information of the second AP.

Step 302: sending the first wireless frame to instruct a station (STA) device to determine a time of the second R-TWT SP according to the TSF information and the second R-TWT SP and refrain from communicating with the first AP within the time of the second R-TWT SP.

In the embodiment of the present disclosure, the second AP is the above-mentioned sharing AP, which is only for illustration and represents the AP corresponding to the second R-TWT SP. The number of second APs may be singular or plural, which is not limited herein. For example, if the number of second APs is plural, the second APs may include AP2 and AP3.

Optionally, the first AP and the second AP may be affiliated APs of the same or different AP MLDs, or may be different AP MLDs or independent APs, which is not limited herein. Optionally, the first AP is affiliated to a first AP MLD, and the second AP is affiliated to a second AP MLD. The first AP and the second AP may be within a certain position range or coverage range, so that the first AP can obtain parameter information of the second AP, for example, the first AP can obtain the second R-TWT SP of the second AP.

The timing synchronization parameter (TSF) information may be configured to represent that when the R-TWT SP is sent by an AP other than the AP indicated by the R-TWT SP, the actual time indicated by the R-TWT SP needs to be synchronized across different APs.

The TSF information may specifically include time deviation information between the actual start times of two second R-TWT SPs generated when the time indicated by the second R-TWT SP is directly sent by the second AP and the first AP respectively. Correspondingly, the time length indicated by the second R-TWT SP remains unchanged, and the TSF information may also indicate time deviation information between the actual end times of two second R-TWT SPs generated when the time indicated by the second R-TWT SP is directly sent by the second AP and the first AP respectively.

In the embodiment of the present disclosure, an example where the TSF information indicates time deviation information between the actual start times of two second R-TWT SPs is taken for description.

Optionally, in the embodiment of the present disclosure, the first wireless frame includes a beacon frame, a probe response frame, an association response frame, or a reassociation response frame. The probe response frame may be an unsolicited probe response frame.

Optionally, the first AP may send the first wireless frame to the STA to instruct the STA to determine the time of the second R-TWT SP (that is, the actual time for service transmission within the second R-TWT SP) according to the TSF information and the second R-TWT SP. For example, the STA may be instructed to add the time deviation information indicated by the TSF information to the start time indicated by the second R-TWT SP to obtain the actual start time of the second R-TWT SP, and then add the duration indicated by the second R-TWT SP to the actual start time of the second R-TWT SP to obtain the actual time of the second R-TWT SP. That is, the time deviation information indicated by the TSF information may be added to the time indicated by the second R-TWT SP to obtain the time of the second R-TWT SP, which achieves synchronization between the time of the second R-TWT SP when shared by the first AP and the time of the second R-TWT SP when shared by the second AP.

Instructing the STA to refrain from communicating with the first AP within the time of the second R-TWT SP means instructing the STA to refrain from performing service data transmission with the first AP within the time of the second R-TWT SP. That is, when there is an overlap between the time of service data transmission between the first AP and the STA (that is, data communication time) and the time of the second R-TWT SP, the service data transmission between the first AP and the STA is stopped.

As an example, it is assumed that the first AP communicates with the STA within the time of the first R-TWT SP, the actual communication duration is 1 millisecond (ms), and there is at least partial overlapping time between the actual communication duration and the time of the second R-TWT SP (for example, the overlapping time is 0.5 ms), then the first AP will instruct the STA to stop the service data transmission within the time of the first R-TWT SP.

In this way, by determining and sending the first wireless frame by the first AP, the STA that receives the first wireless frame can specifically determine, according to the TSF information and the second R-TWT SP in the first wireless frame, the actual time of the second R-TWT SP when shared by the first AP (that is, the time of the second R-TWT SP) corresponding to the time of the second R-TWT SP when shared by the second AP, that is, synchronize the time of the second R-TWT SP when shared by the first AP with the time of the second R-TWT SP when shared by the second AP. The STA refraining from communicating with the first AP within the time of the second R-TWT SP can avoid interference to low-latency service communication within the second R-TWT SP caused by communication between the STA and the first AP. Therefore, both the service data transmission between the first AP and the STA and the communication of low-latency services within the second R-TWT SP are ensured, improving data transmission efficiency and spectrum utilization.

Optionally, the first wireless frame includes identification information of the second AP;
The identification information may include at least one of a MAC address, an AP MLD address of an AP MLD to which the second AP belongs, or a BSS color.

Optionally, the first AP may set a specific field in the first wireless frame, and set the identification information of the second AP through the field.

Optionally, if there are a plurality of second APs, for each second AP, after setting the identification information of the second AP, the set identification information of the second AP may be associated with the second R-TWT SP of the second AP and the TSF information corresponding to the second AP to form R-TWT SP information of each second AP.

In this implementation, by setting the identification information of the second AP in the first wireless frame, when the second AP includes at least two APs, the R-TWT SP and TSF information corresponding to each AP can be determined through the identification information of each AP.

Optionally, the first wireless frame includes first identification information, and the first identification information indicates one or more links to which the second R-TWT SP is applied;
where, in a case that the one or more links indicated by the first identification information include a plurality of links, the first wireless frame further includes TSF offset parameter information of the second R-TWT SP under each link.

Optionally, an aligned flag bit may be set in the first wireless frame. For example, the aligned flag bit may be included in the Broadcast TWT Parameter Set field of the R-TWT SP information. The aligned flag bit is served as the first identification information. Different values of the aligned flag bit are configured to indicate the link to which the second R-TWT SP is applied.

For example, when the aligned flag bit is set to 1, it indicates that the second R-TWT SP is applied to a plurality of links; when the aligned flag bit is set to 0, it indicates that the second R-TWT SP is applied to a single link.

Optionally, for the links to which the shared R-TWT SP is applied, there is an overlap between the times indicated by the second R-TWT SP.

Optionally, in a case that the second R-TWT SP is applied to a single link, the TSF information may include TSF offset parameter information of the second R-TWT SP under the link, that is, the TSF information. In a case that the second R-TWT SP is applied to a plurality of links, TSF offset parameter information of the second R-TWT SP under each applied link may be set, that is, the TSF information includes TSF offset parameter information of the second R-TWT SP under each applied link.

The TSF offset parameter information indicates, for each link to which the second R-TWT SP is applied, time deviation information between the time of the second R-TWT SP under the link when shared by the first AP and the time of the second R-TWT SP under the link when shared by the second AP.

Optionally, the TSF offset parameter information of the second R-TWT SP under the applied links may be the same or different, that is, the TSF offset parameter information under different links may be independent of each other; for example, if the plurality of links to which the second R-TWT SP is applied include Link1 and Link2, the TSF offset parameter information under Link1 and the TSF offset parameter information under Link2 may be the same or different.

Optionally, if the TSF offset parameter information of the second R-TWT SP under the applied links is the same, only one TSF offset parameter may be set in the first wireless frame, thereby saving data transmission bandwidth.

Optionally, the first wireless frame further includes a time offset between the first AP and the second AP;
the time of the second R-TWT SP includes: a time obtained by offsetting the time identified by the second R-TWT SP by the time offset.

Optionally, the TSF information or the TSF offset parameter information may specifically include a time offset between the first AP and the second AP. The time offset is the offset time between the times actually indicated by the second R-TWT SP when directly broadcast by the first AP and directly broadcast by the second AP respectively.

Optionally, in a case that the second R-TWT SP is applied to a single link, the time of the second R-TWT SP under the link is the time obtained by offsetting the time identified by the second R-TWT SP by the time offset. In a case that the second R-TWT SP is applied to a plurality of links, the time of the second R-TWT SP under each link is the time obtained by offsetting the time identified by the second R-TWT SP by the time offset under the link.

Through the above implementation, the time of the second R-TWT SP under each link to which the second R-TWT SP is applied can be determined according to different links to which the second R-TWT SP is applied.

Optionally, sending the first wireless frame may include:
sending the first wireless frame periodically, where a service transmitted within the second R-TWT SP is a periodic service.

Optionally, when the low-latency service data transmitted within the second R-TWT SP is periodic service data, the first AP needs to broadcast the first wireless frame periodically to ensure that the STA that receives the first wireless frame does not affect the communication of the periodic low-latency service transmitted within the second R-TWT SP of the second AP when the STA performs service data transmission with the first AP.

An embodiment of the present disclosure provides a low-latency service transmission method performed by a first access point (AP) device. The method specifically includes the following steps:
determining a first wireless frame, where the first wireless frame includes a second R-TWT SP of a second AP and timing synchronization parameter (TSF) information of the second AP; and
sending the first wireless frame to instruct a station (STA) device to: determine a time of the second R-TWT SP according to the TSF information and the second R-TWT SP, and refrain from communicating with the first AP within the time of the second R-TWT SP.

Optionally, the first wireless frame includes identification information of the second AP;
the identification information may include at least one of a MAC address, an AP MLD address of an AP MLD to which the second AP belongs, or a BSS color.

Optionally, the first wireless frame includes first identification information, and the first identification information indicates one or more links to which the second R-TWT SP is applied;
where, in a case that the one or more links indicated by the first identification information include a plurality of links, the first wireless frame further includes TSF offset parameter information of the second R-TWT SP under each link.

Optionally, the first wireless frame further includes a time offset between the first AP and the second AP;
the time of the second R-TWT SP includes: a time obtained by offsetting a time identified by the second R-TWT SP by the time offset.

Optionally, sending the first wireless frame may include:
sending the first wireless frame periodically, where a service transmitted within the second R-TWT SP is a periodic service.

In this way, by determining and sending the first wireless frame by the first AP, the STA that receives the first wireless frame can specifically determine, according to the TSF information and the second R-TWT SP in the first wireless frame, the actual time of the second R-TWT SP when shared by the first AP (that is, the time of the second R-TWT SP) corresponding to the time of the second R-TWT SP when shared by the second AP, that is, synchronize the time of the second R-TWT SP when shared by the first AP with the time of the second R-TWT SP when shared by the second AP. The STA refraining from communicating with the first AP within the time of the second R-TWT SP can avoid interference to low-latency service communication within the second R-TWT SP caused by communication between the STA and the first AP. Therefore, both the service data transmission between the first AP and the STA and the communication of low-latency services within the second R-TWT SP are ensured, improving data transmission efficiency and spectrum utilization. Embodiments of the present disclosure provide a transmission mode for low-latency service data.

Referring to FIG. 4, an embodiment of the present disclosure provides a low-latency service transmission method, which may be optionally performed by a station (STA) device. The method may include the following steps.

Step 401: receiving a first wireless frame sent by a first access point (AP) device, where the first wireless frame includes a second R-TWT SP of a second AP and TSF information of the second AP.

Step 402: determining a time of the second R-TWT SP according to the TSF information and the second R-TWT SP, and refraining from communicating with the first AP within the time of the second R-TWT SP.

In the embodiment of the present disclosure, the second AP is the above-mentioned sharing AP, which is only for illustration and represents the AP corresponding to the second R-TWT SP. The number of second APs may be singular or plural, which is not limited herein. For example, if the number of second APs is plural, the second APs may include AP2 and AP3.

Optionally, the first AP and the second AP may be affiliated APs of the same or different AP MLDs, or may be different AP MLDs or independent APs, which is not limited herein. Optionally, the first AP is affiliated to a first AP MLD, and the second AP is affiliated to a second AP MLD. The first AP and the second AP may be within a certain position range or coverage range, so that the first AP can obtain parameter information of the second AP, for example, the first AP can obtain the second R-TWT SP of the second AP.

The timing synchronization parameter (TSF) information may be configured to represent that when the R-TWT SP is sent by an AP other than the AP indicated by the R-TWT SP, the actual time indicated by the R-TWT SP needs to be synchronized across different APs.

The TSF information may specifically include time deviation information between the actual start times of two second R-TWT SPs generated when the time indicated by the second R-TWT SP is directly sent by the second AP and the first AP respectively. Correspondingly, the time length indicated by the second R-TWT SP remains unchanged, and the TSF information may also indicate time deviation information between the actual end times of two second R-TWT SPs generated when the time indicated by the second R-TWT SP is directly sent by the second AP and the first AP respectively. In the embodiment of the present disclosure, an example where the TSF information indicates time deviation information between the actual start times of two second R-TWT SPs is taken for description.

Optionally, in the embodiment of the present disclosure, the first wireless frame includes a beacon frame, a probe response frame, an association response frame, or a reassociation response frame. The probe response frame may be an unsolicited probe response frame.

Optionally, when the STA determines the time of the second R-TWT SP according to the TSF information and the second R-TWT SP, for example, the STA may add the time deviation information indicated by the TSF information to the start time indicated by the second R-TWT SP to obtain the actual start time of the second R-TWT SP, and then add the duration indicated by the second R-TWT SP to the actual start time of the second R-TWT SP to obtain the actual time of the second R-TWT SP. That is, the time deviation information indicated by the TSF information may be added to the time indicated by the second R-TWT SP to obtain the time of the second R-TWT SP, that is, the actual time of the second R-TWT SP when shared by the first AP corresponds to the time of the second R-TWT SP when shared by the second AP.

The STA refrains from communicating with the first AP within the time of the second R-TWT SP, which means the STA refrains from performing service data transmission with the first AP within the time of the second R-TWT SP. That is, when there is an overlap between the time of service data transmission between the first AP and the STA (that is, data communication time) and the time of the second R-TWT SP, the service data transmission between the STA and the first AP is stopped.

As an example, it is assumed that the first AP communicates with the STA within the time of the first R-TWT SP, the actual communication duration is 1 millisecond (ms), and there is at least partial overlapping time between the actual communication duration and the time of the second R-TWT SP (for example, the overlapping time is 0.5 ms), then the STA will stop the service data transmission with the first AP within the time of the first R-TWT SP.

In this way, the STA that receives the first wireless frame can specifically determine, according to the TSF information and the second R-TWT SP in the first wireless frame, the actual time of the second R-TWT SP when shared by the first AP (that is, the time of the second R-TWT SP) corresponding to the time of the second R-TWT SP when shared by the second AP, and refrain from communicating with the first AP within the time of the second R-TWT SP, that is, synchronize the time of the second R-TWT SP when shared by the first AP with the time of the second R-TWT SP when shared by the second AP. This can avoid interference to low-latency service communication within the second R-TWT SP caused by communication between the STA and the first AP. Therefore, both the service data transmission between the first AP and the STA and the communication of low-latency services within the second R-TWT SP are ensured, improving data transmission efficiency and spectrum utilization.

Optionally, the first wireless frame includes identification information of the second AP;
the identification information includes at least one of a MAC address, an AP MLD address of an AP MLD to which the second AP belongs, or a BSS color.

Optionally, the STA may determine the identification information of the second AP according to a specific field set in the first wireless frame.

Optionally, if there is identification information of a plurality of second APs in the specific field, it can be determined that there are a plurality of second APs. Further, for each second AP, the second R-TWT SP of the second AP and the TSF information corresponding to the second AP can be determined according to the R-TWT SP information associated with the identification information of the second AP.

In this implementation, by determining the identification information of the second AP from the first wireless frame, the specific number of second APs can be determined, and for each second AP, the second R-TWT SP of the second AP and the TSF information corresponding to the second AP can be determined according to the identification information of the second AP.

Optionally, the first wireless frame includes first identification information, and the first identification information indicates one or more links to which the second R-TWT SP is applied;
where, if the one or more links indicated by the first identification information include a plurality of links, the first wireless frame further includes TSF offset parameter information of the second R-TWT SP under each link.

Optionally, the STA may determine the first identification information through the aligned flag bit included in the Broadcast TWT Parameter Set field of the R-TWT SP information in the first wireless frame. Specifically, the link to which the second R-TWT SP is applied may be determined according to the value of the aligned flag bit.

For example, when the aligned flag bit is set to 1, it indicates that the second R-TWT SP is applied to a plurality of links; when the aligned flag bit is set to 0, it indicates that the second R-TWT SP is applied to a single link.

Optionally, in a case that the second R-TWT SP is applied to a single link, it may be determined that the TSF information includes TSF offset parameter information of the second R-TWT SP under the link. In a case that the second R-TWT SP is applied to a plurality of links, it may be determined that the TSF information includes TSF offset parameter information of the second R-TWT SP under each applied link, and further, the TSF offset parameter information of the second R-TWT SP under each applied link may be determined.

The TSF offset parameter information indicates, for each link to which the second R-TWT SP is applied, time deviation information between the time of the second R-TWT SP under the link when shared by the first AP and the time of the second R-TWT SP under the link when shared by the second AP.

Optionally, the TSF offset parameter information of the second R-TWT SP under the applied links may be the same or different, that is, the TSF offset parameter information under different links may be independent of each other. For example, in a case that the plurality of links to which the second R-TWT SP is applied include Link1 and Link2, the TSF offset parameter information under Link1 and the TSF offset parameter information under Link2 may be the same or different.

Optionally, if the aligned flag bit is set to 1 and only one TSF offset parameter is set in the first wireless frame, it may be determined that the TSF offset parameter information of the second R-TWT SP under the applied links is the same.

Optionally, determining the time of the second R-TWT SP according to the TSF information and the second R-TWT SP may include:
obtaining a time offset from the first wireless frame, where the time offset is a time offset between the first AP and the second AP; and
determining a time obtained by offsetting a time identified by the second R-TWT SP by the time offset as the time of the second R-TWT SP.

Optionally, the TSF information or the TSF offset parameter information may specifically include a time offset between the first AP and the second AP. The time offset is the offset time between the times actually indicated by the second R-TWT SP when directly broadcast by the first AP and directly broadcast by the second AP respectively.

Optionally, in a case that the second R-TWT SP is applied to a single link, the STA may obtain the time offset from the first wireless frame, and determine that the time of the second R-TWT SP under the link is a time obtained by offsetting the time identified by the second R-TWT SP by the time offset. In a case that the second R-TWT SP is applied to a plurality of links, for each link, the STA may obtain the time offset of the second R-TWT SP under the link from the first wireless frame, and determine that the time of the second R-TWT SP under the link is a time obtained by offsetting the time identified by the second R-TWT SP by the time offset under the link.

Through the above implementation, the STA can determine the time of the second R-TWT SP under each link to which the second R-TWT SP is applied according to different links to which the second R-TWT SP is applied.

Optionally, receiving the first wireless frame sent by the first access point (AP) device may include:
periodically receiving the first wireless frame sent by the first AP, where a service transmitted within the second R-TWT SP is a periodic service.

Optionally, when the low-latency service data transmitted within the second R-TWT SP is periodic service data, the STA periodically receives the first wireless frame sent by the first AP, so as to avoid performing service data transmission with the first AP within the time of the second R-TWT SP determined according to the periodically received first wireless frame, and avoid interfering with the communication of the periodic low-latency service transmitted within the second R-TWT SP of the second AP.

An embodiment of the present disclosure provides a low-latency service transmission method, which may be optionally performed by a station (STA) device. The method may include the following steps:
receiving a first wireless frame sent by a first access point (AP) device, where the first wireless frame includes a second R-TWT SP of a second AP and TSF information of the second AP; and
determining a time of the second R-TWT SP according to the TSF information and the second R-TWT SP, and refraining from communicating with the first AP within the time of the second R-TWT SP.

Optionally, the first wireless frame includes identification information of the second AP;
the identification information includes at least one of a MAC address, an AP MLD address of an AP MLD to which the second AP belongs, or a BSS color.

Optionally, the first wireless frame includes first identification information, and the first identification information indicates one or more links to which the second R-TWT SP is applied;
wherein, in a case that the one or more links indicated by the first identification information include a plurality of links, the first wireless frame further includes TSF offset parameter information of the second R-TWT SP under each link.

Optionally, determining the time of the second R-TWT SP according to the TSF information and the second R-TWT SP may include:
obtaining a time offset from the first wireless frame, where the time offset is a time offset between the first AP and the second AP; and
determining a time obtained by offsetting a time identified by the second R-TWT SP by the time offset as the time of the second R-TWT SP.

Optionally, receiving the first wireless frame sent by the first access point (AP) device may include:
periodically receiving the first wireless frame sent by the first AP, where a service transmitted within the second R-TWT SP is a periodic service.

In this way, the STA that receives the first wireless frame can specifically determine, according to the TSF information and the second R-TWT SP in the first wireless frame, the actual time of the second R-TWT SP when shared by the first AP (that is, the time of the second R-TWT SP) corresponding to the time of the second R-TWT SP when shared by the second AP, that is, synchronize the time of the second R-TWT SP when shared by the first AP with the time of the second R-TWT SP when shared by the second AP. Refraining from communicating with the first AP within the time of the second R-TWT SP can avoid interference to low-latency service communication within the second R-TWT SP caused by the communication between the STA and the first AP. Therefore, both the service data transmission between the first AP and the STA and the communication of low-latency services within the second R-TWT SP are ensured, improving data transmission efficiency and spectrum utilization.

Referring to FIG. 5, based on the same principle as the method provided in the embodiment of the present disclosure, an embodiment of the present disclosure provides an electronic device. The electronic device is a first access point (AP) device, and the electronic device includes:
a determining module 501, configured to determine a first wireless frame, where the first wireless frame includes a second R-TWT SP of a second AP and TSF information of the second AP; and
a sending module 502, configured to send the first wireless frame to instruct a station (STA) device to: determine a time of the second R-TWT SP according to the TSF information and the second R-TWT SP, and refrain from communicating with the first AP within the time of the second R-TWT SP.

An embodiment of the present disclosure provides a low-latency service transmission apparatus applied to an access point (AP) device. The apparatus includes:
a wireless frame determining module, configured to determine a first wireless frame, where the first wireless frame includes first identification information, the first identification information identifies information of power-saving capability supported by the AP, and the information of the power-saving capability includes whether the AP supports scheduled power saving and/or dynamic power saving; and
a wireless frame sending module, configured to send the first wireless frame.

The apparatus further includes other modules of the electronic device in the foregoing embodiment, which are not repeated herein.

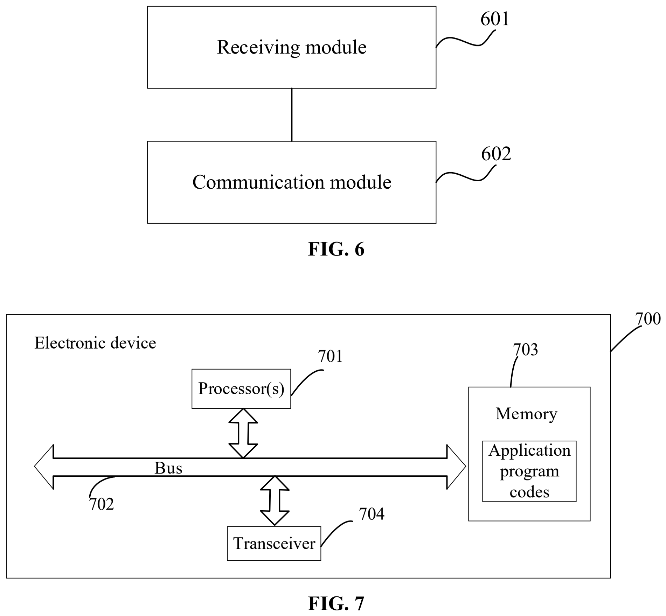

Referring to FIG. 6, based on the same principle as the method provided in the embodiment of the present disclosure, an embodiment of the present disclosure provides an electronic device. The electronic device is a station (STA) device, and the electronic device includes:
a receiving module 601, configured to receive a first wireless frame sent by a first access point (AP) device, where the first wireless frame includes a second R-TWT SP of a second AP and TSF information of the second AP; and
a communication module 602, configured to determine a time of the second R-TWT SP according to the TSF information and the second R-TWT SP, and refrain from communicating with the first AP within the time of the second R-TWT SP.

An embodiment of the present disclosure provides a low-latency service transmission apparatus applied to a station (STA) device. The apparatus includes:
a wireless frame receiving module, configured to receive a first wireless frame, where the first wireless frame includes first identification information, the first identification information identifies information of power-saving capability supported by an access point (AP) device, and the information of the power-saving capability includes whether the AP supports scheduled power saving and/or dynamic power saving.

The apparatus further includes other modules of the electronic device in the foregoing embodiment, which are not repeated herein.

In an optional embodiment, an embodiment of the present disclosure provides an electronic device. As shown in FIG. 7, the electronic device 700 may be a server, including: one or more processors 701 and a memory 703. The one or more processors 701 and the memory 703 are connected, for example, through a bus 702. Optionally, the electronic device 700 may further include a transceiver 704. It should be noted that in practical applications, the transceiver 704 is not limited to one, and the structure of the electronic device 700 does not constitute a limitation to the embodiment of the present disclosure.

A processor 701 may be a Central Processing Unit (Central Processing Unit, CPU), a general-purpose processor, a Digital Signal Processor (Digital Signal Processor, DSP), an Application Specific Integrated Circuit (Application Specific Integrated Circuit, ASIC), a Field Programmable Gate Array (Field Programmable Gate Array, FPGA) or other programmable logic devices, transistor logic devices, hardware components, or any combination thereof. The processor 701 can implement or execute various exemplary logical blocks, modules, and circuits described in combination with the disclosure content of the present disclosure. The processor 701 may also be a combination of computing functions, for example, including a combination of one or more microprocessors, a combination of a DSP and a microprocessor, and the like.

The bus 702 may include a path for transmitting information between the above components. The bus 702 may be a Peripheral Component Interconnect (Peripheral Component Interconnect, PCI) bus, an Extended Industry Standard Architecture (Extended Industry Standard Architecture, EISA) bus, or the like. The bus 702 can be divided into an address bus, a data bus, a control bus, and the like. For ease of representation, only one thick line is used in FIG. 7, but it does not mean that there is only one bus or one type of bus.

The memory 703 may be a Read Only Memory (Read Only Memory, ROM) or other types of static storage devices that can store static information and instructions, a Random Access Memory (Random Access Memory, RAM) or other types of dynamic storage devices that can store information and instructions, may also be an Electrically Erasable Programmable Read Only Memory (Electrically Erasable Programmable Read Only Memory, EEPROM), a Compact Disc Read Only Memory (Compact Disc Read Only Memory, CD-ROM), optical disc storage (including compact disc, laser disc, optical disc, digital versatile disc, Blu-ray disc, etc.), magnetic disk storage media or other magnetic storage devices, or any other medium that can be configured to carry or store desired program code in the form of instructions or data structures and that can be accessed by a computer, but is not limited thereto.

The memory 703 is configured to store application program codes for executing the solution of the present disclosure, and the execution is controlled by the processor 701. The processor 701 is configured to execute the application program codes stored in the memory 703 to implement the content shown in the foregoing method embodiments.

The electronic device includes but is not limited to mobile terminals such as mobile phones, notebook computers, digital broadcast receivers, personal digital assistants (PDAs), tablet computers (PADs), portable multimedia players (PMPs), in-vehicle terminals (such as in-vehicle navigation terminals), and fixed terminals such as digital TVs, desktop computers. The electronic device shown in FIG. 7 is only an example, and should not bring any limitation to the functions and application scope of the embodiments of the present disclosure.

The server provided in the present disclosure may be an independent physical server, or a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, CDNs, and big data and artificial intelligence platforms. A terminal may be a smart phone, a tablet computer, a notebook computer, a desktop computer, a smart speaker, a smart watch, etc., but is not limited thereto. The terminal and the server may be directly or indirectly connected through a wired or wireless communication manner, which is not limited in the present disclosure.

An embodiment of the present disclosure provides a computer-readable storage medium, having a computer program stored thereon, and when the computer program runs on a computer, the computer can execute the corresponding content in the foregoing method embodiments.

It should be understood that although the flowcharts in the accompanying drawings show the steps in sequence according to the arrows, these steps are not necessarily executed in sequence according to the arrow directions. Unless explicitly stated in the present disclosure, the execution of these steps has no strict sequence limitation, and they can be executed in other sequences. Moreover, at least part of the steps in the flowcharts in the accompanying drawings may include multiple sub-steps or multiple stages. These sub-steps or stages are not necessarily executed at the same time, but can be executed at different times, and their execution order is not necessarily sequential, but can be alternated or interleaved with at least some of other steps, or the sub-steps or stages of other steps.

It should be noted that the computer-readable medium mentioned above in the present disclosure may be a computer-readable signal medium or a computer-readable storage medium, or any combination of the two. A computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to: an electrical connection with one or more wires, a portable computer disk, a hard disk, a random access memory (RAM), a read-only memory (ROM), an erasable programmable read-only memory (EPROM) or a flash memory, an optical fiber, a portable compact disc read-only memory (CD-ROM), an optical storage device, a magnetic storage device, or any suitable combination of the above. In the present disclosure, a computer-readable storage medium may be any tangible medium that contains or stores a program, and the program can be used by or in combination with an instruction execution system, apparatus, or device. In the present disclosure, a computer-readable signal medium may include a data signal propagated in a baseband or as part of a carrier wave, and computer-readable program code is carried therein. Such a propagated data signal may take various forms, including but not limited to an electromagnetic signal, an optical signal, or any suitable combination thereof. A computer-readable signal medium may also be any computer-readable medium other than a computer-readable storage medium, and the computer-readable signal medium can send, propagate, or transmit a program for use by or in combination with an instruction execution system, apparatus, or device. Program code contained on a computer-readable medium can be transmitted using any appropriate medium, including but not limited to: an electric wire, an optical cable, a radio frequency (RF), etc., or any suitable combination of the above.

The above-mentioned computer-readable medium may be included in the above-mentioned electronic device; or the computer-readable medium may exist independently without being assembled into the electronic device.

The above-mentioned computer-readable medium includes one or more programs. When the one or more programs are executed by the electronic device, the electronic device performs the methods shown in the above embodiments.

According to an aspect of the present disclosure, a computer program product or a computer program is provided, which includes computer instructions, and the computer instructions are stored in a computer-readable storage medium. A processor of a computer device reads the computer instructions from the computer-readable storage medium, and the processor executes the computer instructions, so that the computer device executes the methods provided in the various optional implementations described above.

Computer program code for performing the operations of the present disclosure may be written in one or more programming languages or combinations thereof. The programming languages include object-oriented programming languages such as Java, Smalltalk, and C++, as well as conventional procedural programming languages such as "C" language or similar programming languages. The program code can be executed entirely on a user computer, partially on the user computer, as a standalone software package, partially on the user computer and partially on a remote computer, or entirely on the remote computer or server. In cases involving a remote computer, the remote computer may be connected to the user computer through any type of network including a local area network (LAN) or a wide area network (WAN), or may be connected to an external computer (e.g., via the Internet using an Internet Service Provider).

The flowcharts and block diagrams in the accompanying drawings illustrate the possible system architectures, functions, and operations of the systems, methods, and computer program products according to various embodiments of the present disclosure. In this regard, each block in the flowcharts or block diagrams may represent a module, a program segment, or a part of code, and the module, program segment, or part of code includes one or more executable instructions for implementing the specified logical functions. It should also be noted that, in some alternative implementations, the functions marked in the blocks may also occur in a different order from the order marked in the accompanying drawings. For example, two blocks shown in succession may actually be executed substantially in parallel, or they may sometimes be executed in the reverse order, depending on the functions involved. It should also be noted that each block in the block diagrams and/or flowcharts and combinations of blocks in the block diagrams and/or flowcharts can be implemented by a dedicated hardware-based system that performs the specified functions or operations, or by a combination of the dedicated hardware and computer instructions.

The modules described in the embodiments of the present disclosure may be implemented by software or hardware. The name of a module does not constitute a limitation on the module itself in some cases, for example, module A may also be described as "module A configured to perform operation B".

The above description is only preferred embodiments of the present disclosure and an illustration of the applied technical principles. Those skilled in the art should understand that the scope of the disclosure involved in the present disclosure is not limited to the technical solution formed by the specific combination of the above technical features, but also covers other technical solutions formed by any combination of the above technical features or their equivalent features without departing from the disclosure concept, for example, technical solutions formed by replacing the above features with technical features disclosed in the present disclosure (but not limited to) that have similar functions.

## Claims

1. A low-latency service transmission method, performed by a first access point AP device, wherein the method comprises:
determining a first wireless frame, wherein the first wireless frame comprises a second R-TWT SP of a second AP and timing synchronization parameter TSF information of the second AP; and
sending the first wireless frame to instruct a station STA device to: determine a time of the second R-TWT SP according to the TSF information and the second R-TWT SP, and refrain from communicating with the first AP within the time of the second R-TWT SP.

2. The low-latency service transmission method according to claim 1, wherein the first wireless frame comprises identification information of the second AP;
the identification information comprises at least one of a media access control MAC address, an access point multi-link device AP MLD address of an AP MLD to which the second AP belongs, or a basic service set BSS color.

3. The low-latency service transmission method according to claim 1 or 2, wherein the first wireless frame comprises first identification information, and the first identification information indicates one or more links to which the second R-TWT SP is applied;
wherein, in a case that the one or more links indicated by the first identification information comprise a plurality of links, the first wireless frame further comprises TSF offset parameter information of the second R-TWT SP under each link.

4. The low-latency service transmission method according to claim 1, wherein the first wireless frame further comprises a time offset between the first AP and the second AP;
the time of the second R-TWT SP comprises: a time obtained by offsetting a time identified by the second R-TWT SP by the time offset.

5. The low-latency service transmission method according to claim 1, wherein sending the first wireless frame comprises:
sending the first wireless frame periodically, wherein a service transmitted within the second R-TWT SP is a periodic service.

6. A low-latency service transmission method, performed by a station STA device, wherein the method comprises:
receiving a first wireless frame sent by a first access point AP device, wherein the first wireless frame comprises a second R-TWT SP of a second AP and TSF information of the second AP; and
determining a time of the second R-TWT SP according to the TSF information and the second R-TWT SP, and refraining from communicating with the first AP within the time of the second R-TWT SP.

7. The low-latency service transmission method according to claim 6, wherein the first wireless frame comprises identification information of the second AP;
the identification information comprises at least one of a MAC address, an AP MLD address of an AP MLD to which the second AP belongs, or a BSS color.

8. The low-latency service transmission method according to claim 6 or 7, wherein the first wireless frame comprises first identification information, and the first identification information indicates one or more links to which the second R-TWT SP is applied;
wherein, in a case that the one or more links indicated by the first identification information comprise a plurality of links, the first wireless frame further comprises TSF offset parameter information of the second R-TWT SP under each link.

9. The low-latency service transmission method according to claim 6, wherein determining the time of the second R-TWT SP according to the TSF information and the second R-TWT SP comprises:
obtaining a time offset from the first wireless frame, wherein the time offset is a time offset between the first AP and the second AP; and
determining a time obtained by offsetting a time identified by the second R-TWT SP by the time offset as the time of the second R-TWT SP.

10. The low-latency service transmission method according to claim 6, wherein receiving the first wireless frame sent by the first access point AP device comprises:
periodically receiving the first wireless frame sent by the first AP, wherein a service transmitted within the second R-TWT SP is a periodic service.

11. An electronic device, wherein the electronic device is a first access point AP device and comprises:
a determining module, configured to determine a first wireless frame, wherein the first wireless frame comprises a second R-TWT SP of a second AP and TSF information of the second AP; and
a sending module, configured to send the first wireless frame to instruct a station STA device to: determine a time of the second R-TWT SP according to the TSF information and the second R-TWT SP, and refrain from communicating with the first AP within the time of the second R-TWT SP.

12. An electronic device, wherein the electronic device is a station STA device and comprises:
a receiving module, configured to receive a first wireless frame sent by a first access point AP device, wherein the first wireless frame comprises a second R-TWT SP of a second AP and TSF information of the second AP; and
a communication module, configured to determine a time of the second R-TWT SP according to the TSF information and the second R-TWT SP, and refrain from communicating with the first AP within the time of the second R-TWT SP.

13. An electronic device, comprising a memory, one or more processors, and a computer program stored in the memory and executable on the one or more processors, wherein when the one or more processors execute the program, the method according to any one of claims 1 to 5 or the method according to any one of claims 6 to 10 is implemented.

14. A computer-readable storage medium, having a computer program stored thereon, wherein when the computer program is executed by one or more processors, the method according to any one of claims 1 to 5 or the method according to any one of claims 6 to 10 is implemented.
